# FASCICULE DE BREVET EUROPEEN

(11) **EP 3 384 502 B1**
(45) Date de publication et mention de la délivrance du brevet: **25.09.2019**
(21) Numéro de dépôt: 16808964.7
(22) Date de dépôt: 01.12.2016
(51) Int. Cl.: G21F 5/012

(54) **DISPOSITIF DE RANGEMENT POUR L'ENTREPOSAGE ET/OU LE TRANSPORT D'ASSEMBLAGES DE COMBUSTIBLE NUCLEAIRE, COMPRENANT DES ETAGES A FONCTIONS DIFFERENCIEES**
REGALVORRICHTUNG ZUM AUFBEWAHREN UND/ODER TRANSPORTIEREN VON KERNBRENNSTABBÜNDELN MIT STUFEN MIT UNTERSCHIEDLICHEN FUNKTIONALITÄTEN
RACKING DEVICE FOR STORING AND/OR TRANSPORTING NUCLEAR FUEL ASSEMBLIES, INCLUDING STAGES WITH DIFFERENTIATED FUNCTIONS

(30) Priorité: 03.12.2015 FR 1561816
(43) Date de publication de la demande: 10.10.2018
(73) Titulaire: TN International, 78180 Montigny Le Bretonneux (FR)
(72) Inventeur: DELAGE, Olivier, 78340 Les-Clayes-Sous Bois (FR); GORE, Yohann, 78114 Magny Les Hameaux (FR)
(74) Mandataire: Brevalex
(86) Numéro de dépôt international: PCT/EP2016/079385
(87) Numéro de publication internationale: WO 2017/093376

(56) Documents cités:
- WO-A1-2014/010386
- FR-A1- 2 872 955
- FR-A2- 2 650 113
- JP-A- 2014 016 323

## Description

### DOMAINE TECHNIQUE

La présente invention se rapporte au domaine du transport et/ou entreposage d'assemblages de combustible nucléaire, de préférence des assemblages usés au sein desquels le combustible a été irradié. De tels dispositifs de rangement est connu des documents JP 2014-016323 A, WO 2014/010386 A1 et FR 2 650 113 A2.

### ETAT DE LA TECHNIQUE ANTERIEURE

Un tel dispositif, également appelé « panier » ou « râtelier » de rangement, comprend une pluralité de logements adjacents chacun apte à recevoir un assemblage de combustible nucléaire.

Ce dispositif de rangement, destiné à être logé dans une cavité d'un emballage, est conçu afin de pouvoir remplir simultanément trois fonctions essentielles, qui vont être brièvement exposées ci-dessous.

Il s'agit en effet tout d'abord de la fonction de transfert thermique de la chaleur dégagée par les assemblages de combustible. Généralement, il est utilisé de l'aluminium ou l'un de ses alliages, en raison de ses bonnes propriétés de conduction thermique.

La seconde fonction concerne l'absorption neutronique, et le souci de maintenir la sous-criticité du dispositif de rangement lorsque celui-ci est chargé avec les assemblages de combustible. Ceci est réalisé en utilisant des matériaux absorbeurs de neutrons dits matériaux neutrophages, tels que le bore. Additionnellement, la sous-criticité peut également être assurée en ménageant des espaces susceptibles d'être remplis d'eau, par exemple à l'intérieur même des cloisons délimitant les logements du dispositif de rangement.

Enfin, la troisième fonction essentielle est relative à la résistance mécanique du dispositif. Il est noté que la résistance mécanique globale du dispositif doit être compatible avec les exigences réglementaires de sûreté pour le transport/entreposage de matières nucléaires, notamment en ce qui concerne les épreuves dites « de chute libre ».

De l'art antérieur, il est connu de former le panier en superposant des étages réalisés à l'aide d'ensembles structurels à encoches empilés et entrecroisés. Ces ensembles sont réalisés à l'aide d'un même matériau à base d'aluminium, comprenant une forte densité de bore afin de remplir la fonction d'absorption neutronique.

Cependant, ce type de matériau boré est coûteux, ce qui constitue un véritable inconvénient lorsqu'il est utilisé dans des volumes importants. C'est le cas dans ce type de conception, étant donné que pour remplir la fonction thermique, il est nécessaire de prévoir une épaisseur importante pour « transporter » le flux de chaleur. A titre indicatif, un panier conçu de la sorte peut requérir jusqu'à 3 à 5 tonnes d'alliage en aluminium comprenant du bore.

A cet égard, il est noté que cette conception souffre d'un paradoxe résidant dans le fait que plus la teneur en bore est élevée dans l'alliage, plus la fonction thermique est dégradée. Il est donc difficile d'aboutir à un compromis satisfaisant pour remplir correctement ces deux fonctions d'absorption thermique et de transfert thermique, surtout lorsque ce compromis doit également tenir compte des contraintes habituelles de masse globale et de coûts. En effet, l'augmentation de l'épaisseur des ensembles à encoches en matériau boré apparaît comme une solution théorique évidente pour diminuer la teneur en bore dans ces ensembles, et ainsi réduire les coûts de ces derniers. Néanmoins, cela pénalise fortement la masse globale du panier, sans pour autant diminuer sensiblement la teneur nécessaire en bore pour répondre au critère de sous-criticité. Pour abaisser la teneur en bore à des valeurs satisfaisantes d'un point de vue coûts du matériau, il faut prévoir des épaisseurs largement surdimensionnées, incompatibles avec les contraintes d'exploitation de l'emballage.

En outre, avec cette conception prévoyant un même alliage d'aluminium boré pour tous les ensembles à encoches empilés et entrecroisés du panier, la justification de la tenue mécanique dans le temps peut s'avérer compliquée à démontrer.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un dispositif de rangement pour le transport et/ou l'entreposage d'assemblages de combustible nucléaire, ledit dispositif comportant une pluralité de logements adjacents, chacun destiné à recevoir un assemblage de combustible nucléaire, le dispositif comportant plusieurs étages empilés selon une direction d'empilement parallèle aux axes longitudinaux des logements, ces derniers étant délimités en tout ou partie par lesdits étages.

Selon l'invention, le dispositif de rangement comprend
des premiers étages (E₁, Eᵢ₋₁, Eᵢ₊₁) d'absorption neutronique et de conductivité thermique, ainsi que des seconds étages (E₂, Eᵢ) de résistance mécanique agencés en alternance avec les premiers étages selon ladite direction d'empilement,
chaque premier étage (E₁, Eᵢ₋₁, Eᵢ₊₁) comprenant au moins un premier ensemble à encoches s'étendant selon une première direction orthogonale à la direction d'empilement, ainsi qu'au moins un second ensemble à encoches s'étendant selon une seconde direction orthogonale à la première direction ainsi qu'à la direction d'empilement, les premier et second ensembles étant entrecroisés et comportant chacun au moins un élément en alliage d'aluminium comprenant du bore,
chaque second étage (E₂, Eᵢ) comportant au moins une première structure s'étendant selon la première direction ainsi qu'au moins une seconde structure s'étendant selon la seconde direction, les première et seconde structures étant empilées selon la direction d'empilement et chacune réalisée dans un ou plusieurs matériaux dépourvus d'éléments absorbeurs de neutrons, les première et seconde structures étant chacune dépourvues d'encoches sur leurs chants opposés selon la direction d'empilement, et présentant chacune une section transversale de hauteur sensiblement constante tout le long de celle-ci,
et pour au moins l'un des seconds étages Eᵢ de part et d'autre duquel sont agencés un premier étage Eᵢ₋₁ et un premier étage Eᵢ₊₁, la première structure du second étage Eᵢ repose sur un chant du premier ensemble à encoches du premier étage Eᵢ₋₁ et traverse une encoche du second ensemble à encoches de ce premier étage Eᵢ₋₁, tandis qu'un chant du second ensemble à encoches du premier étage Eᵢ₊₁ repose sur la seconde structure du second étage Eᵢ, celle-ci traversant une encoche du premier ensemble à encoches de ce premier étage Eᵢ₊₁.

L'invention est remarquable en ce qu'elle prévoit des étages en alternance qui remplissent des fonctions spécifiques et différenciées, permettant en particulier de plus facilement justifier la tenue mécanique dans le temps. En effet, celle-ci est assurée par les structures des seconds étages, qui n'ont comme seule vocation que celle d'assurer la résistance mécanique du dispositif de rangement, notamment en cas de chute libre latérale. Aucune fonction de protection neutronique ou de transfert thermique n'est associée à ces structures formant les seconds étages. En outre, grâce à l'absence d'encoches sur ces structures, celles-ci offrent une résistance mécanique particulièrement élevée, tout en présentant une hauteur limitée. Cette hauteur réduite des structures des seconds étages permet d'augmenter la hauteur des ensembles à encoches formant les premiers étages, ce qui améliore les fonctions d'absorption neutronique et de transfert thermique.

Enfin, il est noté que malgré l'absence d'encoches sur les structures des seconds étages, celles-ci sont néanmoins parfaitement intégrées dans l'empilement, en coopérant avec les encoches des ensembles formant les premiers étages adjacents. Cela participe à l'obtention d'un empilement structuré, offrant une résistance mécanique accrue.

L'invention prévoit également au moins l'une des caractéristiques optionnelles suivantes, prises isolément ou en combinaison.

Les premier et second ensembles présentent des encoches sur chacun de leurs chants opposés selon la direction d'empilement. Grâce à cet agencement, la section résiduelle entre les encoches se trouve sensiblement centrée sur la hauteur des ensembles entrecroisés. Cela permet une meilleure tenue mécanique. Néanmoins, un seul des chants opposés pourrait être pourvu d'encoches, sans sortir du cadre de l'invention.

L'alternance des premières structures et des premiers ensembles à encoches forment une première cloison de séparation de logements, de part et d'autre de laquelle sont au moins délimités deux logements, et l'alternance des secondes structures et des seconds ensembles à encoches forment une seconde cloison de séparation de logements, de part et d'autre de laquelle sont au moins délimités deux logements, la première et la seconde cloison de séparation étant orthogonales entre elles.

De plus, chaque première et seconde cloison présente de préférence une épaisseur sensiblement constante, ce qui permet l'obtention d'un contact direct entre les structures des seconds étages et les assemblages de combustible. Cela confère une meilleure transmission d'efforts transverses, en particulier en cas de chute libre latérale.

Chaque premier étage présente, en dehors d'une zone d'entrecroisement entre les premier et second ensembles à encoches, une première hauteur moyenne H₁ selon la direction d'empilement, chaque second étage présente, en dehors d'une zone de croisement entre les première et seconde structures, une seconde hauteur moyenne H₂ selon la direction d'empilement, et les première et seconde hauteurs moyennes répondent à la condition 0,1 < H₂/H₁ < 0,35. Comme cela a été évoqué ci-dessus, la prépondérance des ensembles à encoches permet de remplir correctement les fonctions d'absorption neutronique et de transfert thermique.

De plus, la première hauteur H₁ est préférentiellement supérieure à 100 mm. Cette valeur élevée limite avantageusement le nombre d'étages à superposer, et facilite ainsi le procédé de fabrication.

Pour renforcer la fonction d'absorption neutronique, la teneur en bore dans au moins certains desdits éléments en alliage d'aluminium des premier et second ensembles à encoches, est supérieure à 25 mg/cm³. Néanmoins, la présence d'éléments à teneur élevée en bore ne pénalise pas le coût global du dispositif de rangement, puisque ces éléments ne s'étendent pas sur toute la hauteur des cloisons de séparation des logements, mais seulement au sein des premiers étages.

Chaque première et seconde structure est réalisée de préférence en acier.

Chaque second étage comporte un pion de jonction au niveau d'une zone de croisement entre les première et seconde structures, traversées au moins partiellement par ce pion de jonction. Cet agencement améliore la résistance mécanique du dispositif de rangement, bien qu'un simple appui puisse suffire entre les deux structures qui se croisent, sans sortir du cadre de l'invention.

De préférence, les première et seconde structures sont chacune de section carrée ou rectangulaire.

En outre, les première et seconde structures présentent chacune une section de largeur uniforme ou non uniforme, cette largeur correspondant à l'épaisseur des cloisons de séparation.

Eventuellement, les première et seconde structures sont chacune traversées par des orifices de passage d'eau s'étendant selon la direction d'empilement.

Les premier et second ensembles à encoches entrecroisés sont chacun réalisés d'une seule pièce, ou bien par plusieurs pièces assemblées les unes aux autres et délimitant de préférence entre elles un espace vide, destiné à la circulation d'une lame d'eau.

Ces première et seconde structures sont chacune réalisées d'une seule pièce, ou bien par plusieurs pièces assemblées les unes aux autres.

Le dispositif de rangement comprend également des parois périphériques agencées à la périphérie des premiers et seconds étages empilés, lesdites parois périphériques délimitant une partie de certains des logements.

Enfin, le dispositif de rangement est configuré de sorte qu'en configuration assemblée, des jeux selon la direction d'empilement soient prévus au niveau des zones de croisement / d'entrecroisement entre les éléments constitutifs des étages. Cela permet de privilégier le contact entre ces mêmes éléments en dehors de leurs zones de croisement / d'entrecroisement.

L'invention a aussi pour objet un emballage pour l'entreposage et/ou le transport d'assemblages de combustible nucléaire, l'emballage comprenant une cavité dans laquelle est logé un dispositif de rangement tel que décrit ci-dessus.

L'invention a également pour objet un colis comprenant un tel emballage, ainsi que des assemblages de combustible agencés dans les logements du dispositif de rangement de cet emballage.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective non détaillée d'un dispositif de rangement pour l'entreposage et/ou le transport d'assemblages de combustible nucléaire, selon la présente invention ;
- la figure 2 est une vue partielle en coupe transversale prise selon le plan transversal P de la figure 1 ;
- les figures 3a et 3b sont des vues en perspective d'une partie du dispositif de rangement montré selon un premier mode de réalisation préféré de l'invention, au cours de son assemblage ;
- les figures 4a et 4b sont des vues en perspective détaillant la coopération entre les éléments constitutifs du dispositif de rangement montré sur les figures 3a et 3b ;
- les figures 5, 6a et 6b montrent le dispositif de rangement selon une alternative de réalisation ;
- la figure 7 est une vue en coupe transversale d'un dispositif de rangement selon un second mode de réalisation préféré de l'invention ;
- les figures 8a et 8b sont des vues en perspective détaillant la coopération entre les éléments constitutifs du dispositif de rangement montré sur la figure 7 ;
- la figure 9 est une vue analogue à celle de la figure 8a, avec le dispositif de rangement se présentant selon une alternative de réalisation ;
- la figure 10 est une vue en perspective d'une partie d'un dispositif de rangement selon un troisième mode de réalisation préféré de l'invention ;
- la figure 11 est une vue en perspective détaillant la coopération entre les éléments constitutifs du dispositif de rangement montré sur la figure 10 ;
- la figure 12 est une vue partielle en perspective d'un second étage de résistance mécanique du dispositif de rangement montré sur les figures 10 et 11 ; et
- la figure 13 représente une vue en coupe transversale de l'un des ensembles à encoches formant les premiers étages du dispositif de rangement.

### EXPOSÉ DÉTAILLÉ DE MODES DE RÉALISATION PRÉFÉRÉS

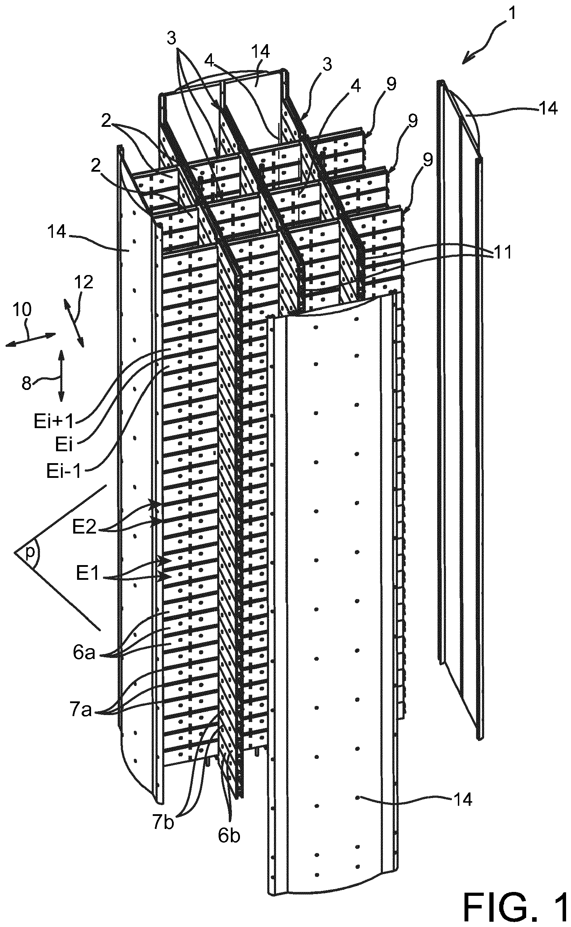

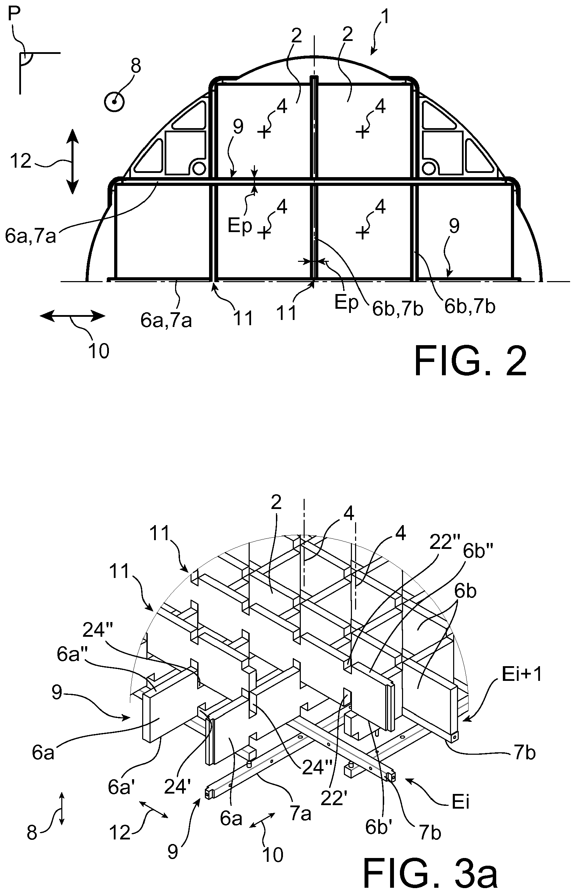

En référence aux figures 1 et 2, il est représenté un dispositif de rangement 1 prévu pour être placé dans la cavité d'un emballage (non représenté) destiné au transport et/ou entreposage d'assemblages de combustible nucléaire irradié (non représentés). De manière conventionnelle, lorsque l'emballage reçoit le dispositif de rangement 1 et que celui-ci est chargé des assemblages de combustible irradié, l'ensemble de ces éléments forment un colis, qui est également objet de l'invention.

Comme visible sur les figures 1 et 2, le dispositif de rangement 1 comprend une pluralité de logements adjacents 2 disposés parallèlement, ces derniers s'étendant chacun selon un axe longitudinal 4. Les logements 2 sont chacun apte à recevoir au moins un assemblage de combustible de section carrée, et de préférence un seul. Les logements sont prévus dans un nombre compris entre quatre et vingt-quatre, par exemple douze logements comme sur la figure 1.

Les logements 2 sont donc prévus de manière à être juxtaposés les uns aux autres. Ils sont réalisés par l'intermédiaire d'une pluralité de cloisons de séparation 9, 11 parallèles aux axes 4, et également parallèles à un axe longitudinal de l'emballage traversant son fond et son couvercle. Les cloisons 9, 11 sont formées à l'aide de différents éléments 6a, 6b, 7a, 7b empilés selon une direction d'empilement 8 qui est de préférence parallèle aux axes longitudinaux 4 des logements 2. Par convention, dans la suite de la description, il est admis que la notion de « hauteur » est à associer à la direction d'empilement 8.

Les cloisons 9, 11 sont agencées de manière parallèle et perpendiculaire entre elles. Plus précisément, les cloisons 9, 11 sont formées par des premiers étages E₁ et des seconds étages E₂, empilés en alternance selon la direction d'empilement 8. Chaque étage correspond donc sensiblement à un tronçon axial du dispositif 1.

Les premiers étages E₁ ont une fonction d'absorption neutronique et de conductivité thermique. Ils comprennent chacun des premiers ensembles 6a à encoches, s'étendant parallèlement dans un même plan selon une première direction 10 orthogonale à la direction d'empilement 8. Ils comportent également des seconds ensembles 6b à encoches, s'étendant parallèlement dans un même plan selon une seconde direction 12 orthogonale à la première direction 10, ainsi qu'à la direction d'empilement 8. Les premiers et seconds ensembles à encoches 6a, 6b sont entrecroisés perpendiculairement au niveau de leurs encoches, comme cela sera détaillé ci-après. Du fait de la coopération entre ces encoches, à l'état assemblé du dispositif 1, les premiers et seconds ensembles à encoches 6a, 6b s'inscrivent dans un même plan orthogonal aux axes 4. Ici, ces ensembles 6a, 6b correspondent à des poutres pleines réalisées en alliage d'aluminium comprenant du bore, la teneur en bore pouvant être supérieure à 25 mg/cm³.

En outre, les seconds étages E₂ présentent une fonction de résistance mécanique, en étant réalisés à l'aide de premières structures 7a s'étendant parallèlement dans un même plan selon la première direction 10, et de secondes structures 7b s'étendant parallèlement dans un même plan selon la seconde direction 12. Les premières et secondes structures 7a, 7b sont empilées selon la direction d'empilement 8. Elles peuvent être directement superposées l'une sur l'autre, ou bien un faible jeu peut être pratiqué au niveau de leur zone de croisement, comme cela sera décrit ci-après. Elles sont de préférence réalisées en acier, ou dans tout autre matériau analogue dépourvu d'éléments absorbeurs de neutrons. Il est indiqué que par éléments absorbeurs de neutrons, il est entendu des éléments qui présentent une section efficace supérieure à 100 barns pour les neutrons thermiques. A titre d'exemples indicatifs, il s'agit de matériaux dépourvus de bore, de gadolinium, d'hafnium, de cadmium, d'indium, etc.

Lorsque les éléments 6a, 6b, 7a, 7b sont empilés selon la direction 8, dans l'ordre donné par ces références numériques, les cloisons 9, 11 qui en résultent délimitent conjointement les logements 2 disposant chacun d'une section transversale de forme sensiblement carrée ou rectangulaire. Bien entendu, les logements 2 pourraient présenter toute autre forme autorisant le maintien d'un assemblage de combustible de forme différente, telles qu'une forme hexagonale.

De manière préférée, chacun des ensembles 6a, 6b, 7a, 7b s'étend entre deux cloisons périphériques 14 auxquelles il est solidarisé, ces cloisons périphériques 14 permettant de fermer latéralement l'empilement d'étages E₁, E₂ formant le coeur du panier.

A titre d'exemple indicatif et comme représenté, ces cloisons périphériques 14 peuvent être prévues au nombre de quatre, s'étendre chacune sur toute la hauteur du dispositif 1, et délimiter en partie les logements périphériques 2 de ce dispositif 1.

Par ailleurs, comme cela ressort clairement de ce qui précède, les cloisons 9, 11 participent à la délimitation de plusieurs logements 2 de part et d'autre de celle-ci. Chaque cloison 9, dite première cloison, est obtenue par l'empilement en alternance des premiers ensembles à encoches 6a et des premières structures 7a, tandis que chaque cloison 11, dite seconde cloison, est obtenue par l'empilement en alternance des seconds ensembles à encoches 6b et des secondes structures 7b. Dans leurs empilements respectifs, les éléments 6a, 6b, 7a, 7b sont empilés en présentant de préférence toujours la même orientation.

Ici, chaque cloison 9, 11 présente une épaisseur Ep sensiblement constante, grâce à des largeurs identiques adoptées pour les éléments 6a, 6b, 7a, 7b qui les composent. Cela permet de disposer de surfaces intérieures sensiblement planes pour la délimitation des logements 2, surfaces contre lesquelles les assemblages de combustible peuvent être agencés en appui plan.

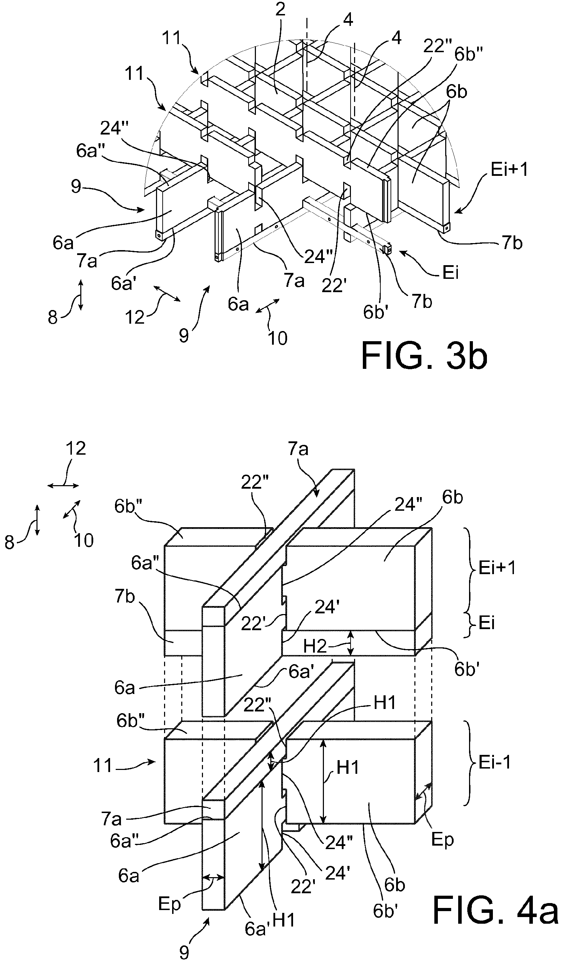

En référence à présent aux figures 3a à 4b, il va être détaillé la conception de chacun des premiers et seconds étages du panier, ainsi que la coopération entre les étages adjacents, selon un premier mode de réalisation préféré de l'invention. Pour ce faire, sur ces figures, il a été représenté un second étage quelconque référencé Eᵢ, ainsi que deux premiers étages adjacents Eᵢ₋₁ et Eᵢ₊₁ situés respectivement de part et d'autre du second étage Eᵢ. Pour faciliter la clarté de la description, il sera par la suite utilisé les termes « supérieur » et « inférieur », en relation avec l'orientation du dispositif telle qu'elle apparaît sur les figures.

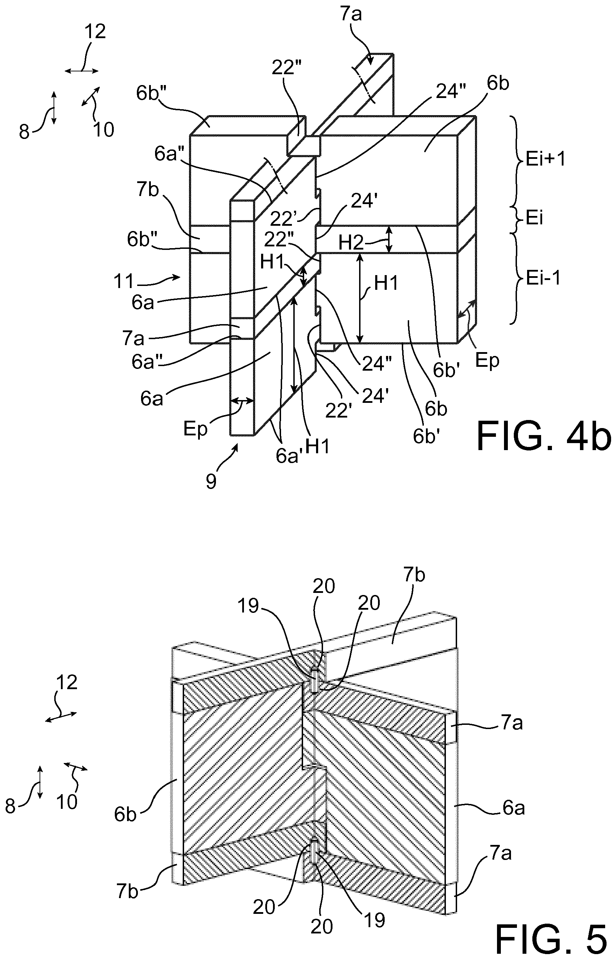

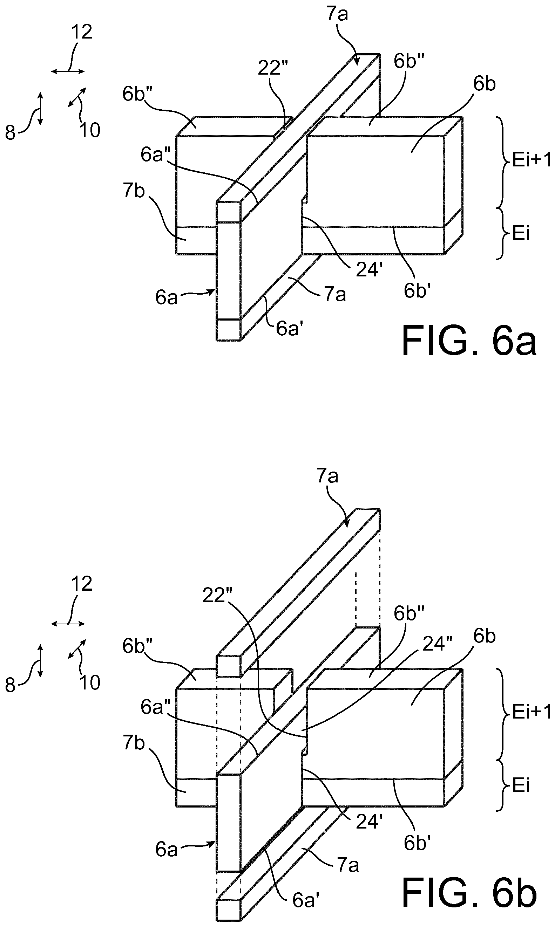

Tout d'abord, il est noté que pour obtenir une résistance mécanique élevée, chaque première et seconde structure 7a, 7b de l'étage Eᵢ est dépourvue d'encoches sur ses chants opposés inférieur et supérieur, la hauteur de la section transversale de chacune de ces structures 7a, 7b étant sensiblement constante tout le long de la structure considérée. A cet égard, la section transversale de ces structures en forme de poutres est de préférence carrée ou rectangulaire, la largeur de cette section étant uniforme tout le long de celle-ci et correspondant à l'épaisseur Ep de la cloison de séparation associée 9, 11. Les poutres 7a, 7b sont pleines et chacune réalisée d'une seule pièce en acier. Cependant, comme cela a été schématisé sur la figure 3a, au niveau d'une zone de croisement entre les première et seconde structures 7a, 7b, celles-ci peuvent être percées d'un orifice 20 borgne ou traversant. Les deux orifices 20 en regard logent un pion de jonction 19 permettant d'assurer une liaison mécanique entre ces deux poutres 7a, 7b d'un même second étage du panier. Le pion 19 remplit alors la fonction de pion de cisaillement en cas de chute libre latérale, à savoir une chute libre au cours de laquelle le panier se déplace selon une direction orthogonale aux axes 4 des logements. Cependant, un simple appui pourrait être retenu entre ces deux poutres 7a, 7b, sans sortir du cadre de l'invention. Une vue plus détaillée de cette solution avec des pions de jonction 19 est montrée sur la figure 5. Cette figure correspond à un dispositif de rangement selon l'alternative de réalisation représentée sur les figures 6a et 6b, mais le principe d'implantation des pions qui y est représenté reste applicable au mode montré sur les figures 4a et 4b.

Toujours en référence aux figures 3a à 4b, il est noté que dans ce mode premier de réalisation préféré, chaque premier et second ensemble 6a, 6b présente des encoches sur ses deux chants opposés inférieur et supérieur. Plus précisément, chaque premier ensemble 6a présente des encoches 24' sur son chant inférieur 6a', tandis qu'il présente aussi des encoches 24" sur son chant supérieur 6a". De la même manière, chaque second ensemble 6b présente des encoches 22' sur son chant inférieur 6b', tandis qu'il présente aussi des encoches 22" sur son chant supérieur 6b".

De façon à limiter les coûts de fabrication, les éléments 6a et 6b présentent une section (hauteur et épaisseur) identique et les encoches 24', 24" sont respectivement et sensiblement de la même hauteur que les encoches 22", 22'. Les éléments 6a et 6b sont ainsi sensiblement identiques.

Pour chaque premier étage Eᵢ₋₁, Eᵢ₊₁, les encoches 22' et 24" peuvent coopérer deux à deux de façon à ce que leurs fonds respectifs soient au contact l'un de l'autre, mais un faible jeu selon la direction 8 reste préféré. Grâce à cet entrecroisement imbriqué entre les deux poutres 6a, 6b, et à une hauteur d'encoches 22', 24" s'étendant sur au moins 30% (et au plus sur 45%) d'une première hauteur moyenne H₁ des poutres, l'étendue de recouvrement entre ces poutres 6a, 6b selon la direction 8 correspond de préférence à plus de 60% de leur hauteur, ce qui permet de les considérer agencées sensiblement dans un même plan transversal du panier. A cet égard, il est indiqué qu'en dehors d'une zone d'entrecroisement entre ces poutres 6a, 6b, celles-ci présentent chacune une première hauteur moyenne H₁ de préférence supérieure à 100 mm. Cette hauteur est largement supérieure à une seconde hauteur moyenne H₂ des structures 7a, 7b en dehors de leur zone de croisement, puisque ces hauteurs sont dimensionnées de manière à répondre à la condition 0,1 < H₂/H₁ < 0,35.

Comme indiqué précédemment, dans la zone d'entrecroisement entre les poutres 6a, 6b, un faible jeu de montage est préféré au niveau des fonds d'encoches 22', 24". Il en est de même entre le fond de l'encoche 24' et le chant supérieur de la structure 7b, les chants respectivement inférieur et supérieur des structures 7b et 7a, le fond de l'encoche 22" et le chant inférieur de la structure 7a. Cet agencement permet de privilégier un contact entre les éléments 6a, 6b, 7a, 7b en dehors des zones d'entrecroisement / de croisement, et garantit ainsi un montage très stable, les appuis étant obtenus sur des longueurs d'éléments plus importantes. En procédant ainsi, une structure hyperstatique est également évitée. Il est noté que cette particularité est également applicable aux autres modes de réalisation préférés de l'invention.

Dans la configuration assemblée du panier obtenue par la coopération des encoches 22' et 24", les poutres 6a, 6b de l'étage Eᵢ₋₁ sont imbriquées de telle sorte que le chant supérieur 6a" se trouve sensiblement dans la continuité du fond de l'encoche 22". Par conséquent, la première structure 7a du second étage Eᵢ repose au niveau de son chant inférieur sur le chant supérieur 6a" du premier ensemble à encoches 6a du premier étage Eᵢ₋₁. Cette première structure 7a traverse également l'encoche 22" du second ensemble 6b de ce premier étage Eᵢ₋₁, de sorte que son chant supérieur se trouve sensiblement dans le même plan que le chant supérieur 6b" du second ensemble 6b de ce premier étage Eᵢ₋₁. Cela permet à la seconde structure 7b, du second étage Eᵢ, de reposer avec son chant inférieur sur le chant supérieur 6b" du second ensemble 6b du premier étage Eᵢ₋₁.

De plus, le chant inférieur 6b' du second ensemble à encoches 6b du premier étage Eᵢ₊₁ repose sur cette seconde structure 7b. Celle-ci traverse également l'encoche 24' du premier ensemble 6a du premier étage Eᵢ₊₁, de sorte que son chant inférieur se trouve sensiblement dans le même plan que le chant inférieur 6a' du premier ensemble 6a de ce premier étage Eᵢ₊₁. Cela permet à ce premier ensemble 6a du premier étage Eᵢ₊₁ de reposer, avec son chant inférieur 6a', sur le chant supérieur de la première structure 7a du second étage Eᵢ. Le premier ensemble 6a du premier étage Eᵢ₊₁ est ainsi disposé et orienté dans l'empilement de la même manière que le premier ensemble 6a du premier étage Eᵢ₋₁, et il en est ensuite de même pour tous les autres éléments 6b, 7a, 7b, participant à la réalisation progressive des premiers et seconds étages alternés selon la direction 8.

Les figures 5, 6a et 6b représentent une alternative de réalisation pour le premier mode décrit ci-dessus. D'ailleurs, sur les figures, les éléments portant les mêmes références numériques correspondent à des éléments identiques ou similaires. Dans cette alternative, la seule modification par rapport à la configuration précédemment décrite réside dans la conception des premier et second ensembles à encoches 6a, 6b, qui ne présentent d'encoches que sur un seul de leurs chants opposés. En effet, pour le premier ensemble 6a, seule l'encoche 24' est conservée sur son chant inférieur 6a', mais son chant supérieur 6a" reste dépourvu d'encoche. De la même manière, pour le second ensemble 6b, seule l'encoche 22' est conservée sur son chant supérieur 6b", mais son chant inférieur 6b' reste dépourvu d'encoche. A l'état assemblé dans lequel les encoches 22", 24' coopèrent l'une avec l'autre de façon à ce que leurs fonds respectifs soient au contact l'un de l'autre ou à faible jeu selon la direction 8, la partie terminale de ces encoches 22", 24' laissent chacune apparaître un espace libre pour le passage de la première structure 7a et de la seconde structure 7b, respectivement. Aussi, cet espace libre dans les encoches 22", 24' présente une hauteur sensiblement identique à la hauteur de ces structures 7a, 7b qui les traversent.

Dans ce cas particulier, la réalisation des premiers et seconds étages alternés se fait en empilant dans la direction 8 les éléments 6a, 7a, 7b, 6b.

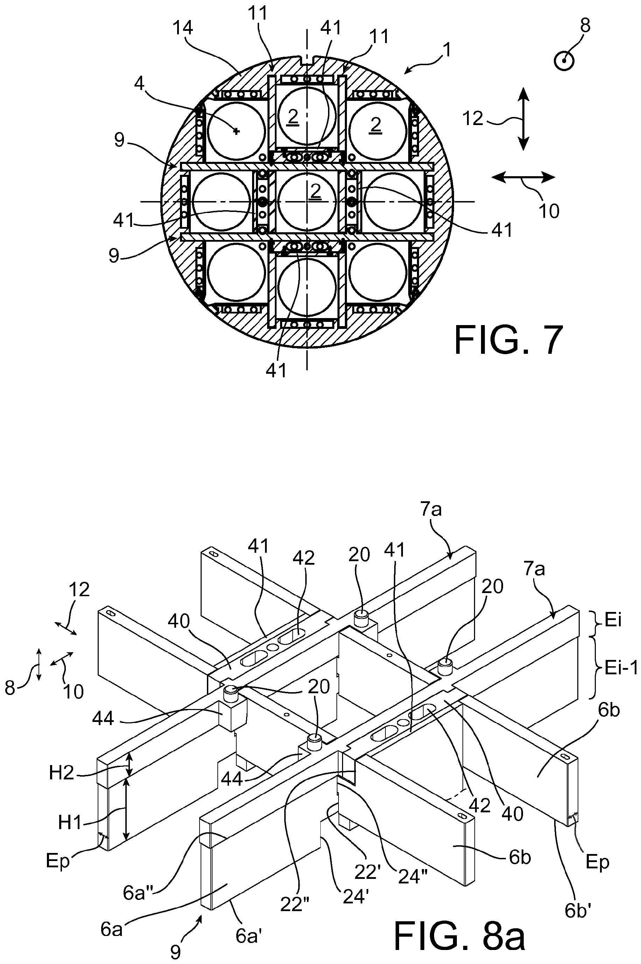

Les figures 7 à 8b représentent un second mode de réalisation, dans lequel certaines parties de cloisons de séparation 9, 11 comprennent une première et une deuxième paroi délimitant entre elles un espace susceptible d'être rempli d'eau, permettant la mise en oeuvre d'une lame d'eau autour d'un ou plusieurs logements. Les premières parois sont réalisées à l'aide des éléments à encoches 6a, 6b. Ici encore, le second mode présente de nombreuses similitudes avec le premier, de sorte que sur les figures, les éléments portant les mêmes références numériques correspondent à des éléments identiques ou similaires.

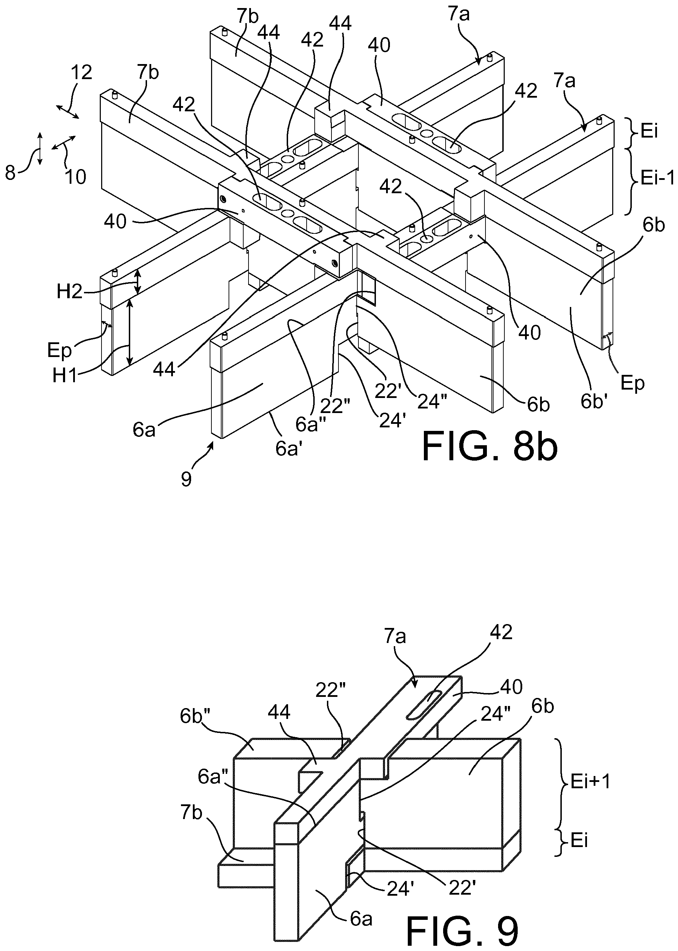

Dans ce second mode de réalisation préféré, le logement central 2 est entièrement entouré de cloisons à lame d'eau, tandis que les logements périphériques sont quant à eux dépourvus d'une telle lame. Pour ce faire, les première et seconde structures 7a, 7b présentent une section transversale de largeur non uniforme, avec un épaississement 40 au niveau de leurs portions définissant le logement central 2. Comme cela est visible sur la figure 8a, les surfaces latérales de chaque épaississement 40, opposées au logement central, sont prévues pour recevoir des plaques 41 de fermeture de la cloison à lame d'eau (seule deux plaques 41 sur quatre ont été partiellement représentées sur la figure 8a, pour des raisons de clarté, tandis que ces plaques ont toutes été représentées sur la figure 7, et toutes supprimées sur la figure 8b).

Ces plaques de fermeture 41, dépourvues d'encoches et de largeur sensiblement égale à celle du logement périphérique qu'elles délimitent en partie, constituent ainsi la seconde paroi de la cloison à lame d'eau. Cette seconde paroi est réalisée à l'aide de plusieurs plaques mises bout à bout et empilées dans la direction 8, mais une plaque unique, de longueur sensiblement égale à la hauteur de la cloison, pourrait également convenir.

Comme pour les éléments 6a, 6b, les plaques de fermeture 41 sont réalisées dans un matériau comprenant des éléments absorbeurs de neutrons, de préférence, un alliage à base d'aluminium.

Chaque épaississement 40 est ici constitué par un organe séparé rapporté sur la poutre formant l'essentiel de la structure 7a, 7b, la fixation s'opérant de préférence à l'aide de liaisons vissées. L'épaississement est traversé par des orifices de passage d'eau 42 qui sont décalés latéralement des ensembles à encoches 6a, 6b directement adjacents dans l'empilement, afin d'autoriser la circulation d'eau à travers les orifices et tout le long de la cloison. Par conséquent, le long des cloisons, l'eau passe entre les ensembles 6a, 6b et les plaques de fermeture 41 au niveau des premiers étages, tandis qu'elle passe à travers les orifices de passage d'eau 42 au niveau des seconds étages.

De plus, avec le décalage latéral des orifices de passage d'eau 42, chaque poutre conserve une section travaillante satisfaisante, propice à l'obtention d'une bonne résistance mécanique. Chaque poutre présente également des ergots de support 44, au niveau desquels sont agencés les pions de jonction 20 entre les structures 7a, 7b. Les ergots 44 sont de préférence agencés respectivement aux extrémités de l'épaississement 40, de l'autre côté de la poutre par rapport à ce dernier.

Dans l'alternative de réalisation montrée sur la figure 9 (sur laquelle les plaques de fermeture 41 n'ont pas été représentées), chaque structure 7a, 7b est réalisée d'une seule pièce, c'est-à-dire que l'épaississement 40 pourvu d'un ou plusieurs orifices de passage d'eau 42 est réalisé d'un seul tenant avec le reste de la poutre, dont la section présente toujours une largeur évolutive, non uniforme, en raison de la présence de cet épaississement 40 et des ergots de support 44.

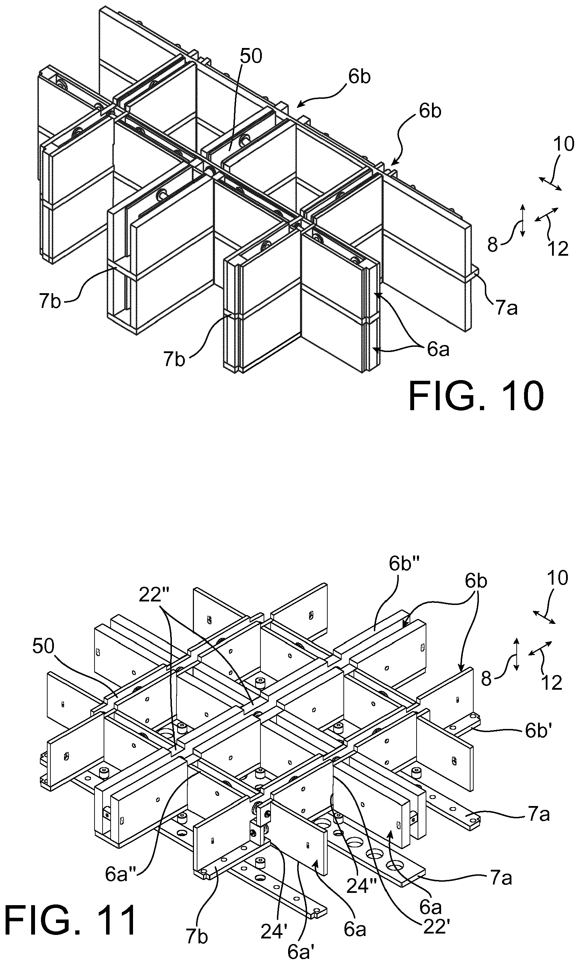

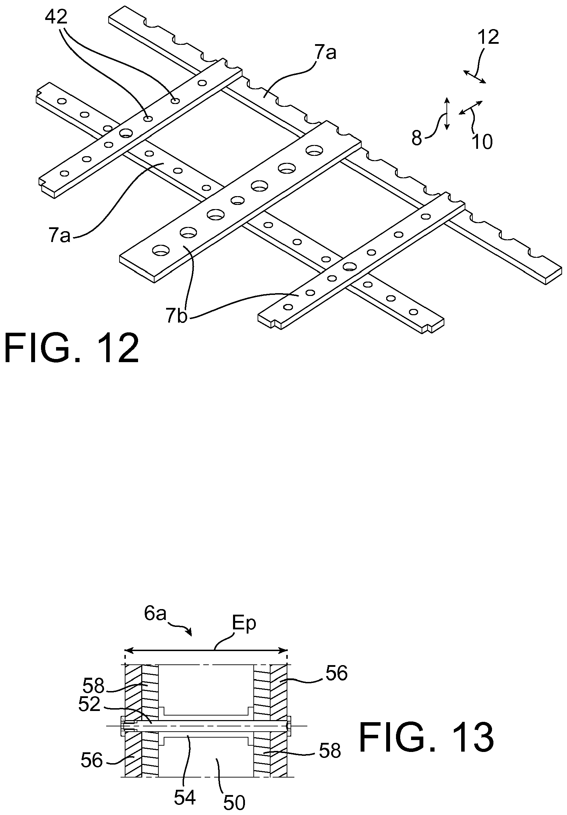

En référence aux figures 10 à 13, il est représenté un troisième mode de réalisation préféré qui se différencie des précédents par le fait que ses ensembles à encoches 6a, 6b ne sont pas pleins, mais chacun réalisé par plusieurs pièces assemblées les unes aux autres délimitant entre elles un espace vide 50 pour le passage d'une lame d'eau. Pour assurer la circulation de la lame d'eau, les structures 7a, 7b de résistance mécanique sont également traversées par les orifices 42, comme cela est le mieux visible sur la figure 12.

Dans ce troisième mode de réalisation préféré, les chants 6a', 6a", 6b' et 6b" sont pourvus des mêmes type d'encoches 24', 24", 22', 22" que celles décrites en relation avec le premier mode de réalisation préféré. Aussi, ces encoches sont-elles créées conjointement par des entailles en regard, pratiquées sur les éléments constitutifs de chaque ensemble 6a, 6b.

En référence plus précisément à la figure 13, il est représenté l'un des ensembles 6a, en section dans un plan passant en dehors de ses encoches. Bien entendu, les ensembles 6b présentent une conception identique ou similaire.

L'ensemble 6a est globalement réalisé par deux demi-ensembles parallèles, reliés entre eux par des moyens de fixation 52 traversant des entretoises 54 séparant ces demi-ensembles, et situées dans l'espace vide 50.

Chaque demi-ensemble comporte une paroi extérieure 56 sensiblement plane et réalisée dans un alliage d'aluminium dépourvu d'éléments absorbeurs de neutrons. C'est dans ces parois extérieures 56 que sont réalisées les entailles pour la formation des encoches 24', 24", 22', 22". De plus, chaque demi-ensemble comprend une paroi intérieure 58 sensiblement plane et de plus faible épaisseur, plaquée sur la surface intérieure de sa paroi 56 associée. Les parois 58 sont réalisées dans un matériau comprenant des éléments absorbeurs de neutrons, par exemple un alliage comprenant du carbure de bore (B4C), de préférence un alliage à base d'aluminium. Les parois intérieures 58 en regard, délimitant l'espace vide 50, présentent une section sensiblement constante, dépourvue d'encoches.

Bien entendu, diverses modifications peuvent être apportées par l'homme du métier aux dispositifs de rangement 1 qui viennent d'être décrits, uniquement à titre d'exemples non limitatifs. L'étendue de la protection étant définie par les revendications annexées.

## Revendications

1. Dispositif de rangement (1) pour le transport et/ou l'entreposage d'assemblages de combustible nucléaire, ledit dispositif comportant une pluralité de logements adjacents (2), chacun destiné à recevoir un assemblage de combustible nucléaire, le dispositif comportant plusieurs étages empilés (E₁, E₂) selon une direction d'empilement (8) parallèle aux axes (4) longitudinaux des logements, ces derniers étant délimités en tout ou partie par lesdits étages,
des premiers étages (E₁, Eᵢ₋₁, Eᵢ₊₁) d'absorption neutronique et de conductivité thermique, ainsi que des seconds étages (E₂, Eᵢ) de résistance mécanique agencés en alternance avec les premiers étages selon ladite direction d'empilement (8),
chaque premier étage (E₁, Eᵢ₋₁, Eᵢ₊₁) comprenant au moins un premier ensemble à encoches (6a) s'étendant selon une première direction (10) orthogonale à la direction d'empilement (8), ainsi qu'au moins un second ensemble à encoches (6b) s'étendant selon une seconde direction (12) orthogonale à la première direction (10) ainsi qu'à la direction d'empilement (8), les premier et second ensembles étant entrecroisés et comportant chacun au moins un élément en alliage d'aluminium comprenant du bore,
chaque second étage (E₂, Eᵢ) comportant au moins une première structure (7a) s'étendant selon la première direction (10) ainsi qu'au moins une seconde structure (7b) s'étendant selon la seconde direction (12), les première et seconde structures étant empilées selon la direction d'empilement (8) et chacune réalisée dans un ou plusieurs matériaux dépourvus d'éléments absorbeurs de neutrons, les première et seconde structures étant chacune dépourvues d'encoches sur leurs chants opposés selon la direction d'empilement, et présentant chacune une section transversale de hauteur sensiblement constante tout le long de celle-ci, **caractérisé en ce que** pour au moins l'un des seconds étages (Eᵢ) de part et d'autre duquel sont agencés un premier étage (Eᵢ₋₁) et un premier étage (Eᵢ₊₁), la première structure (7a) du second étage (Eᵢ) repose sur un chant (6a") du premier ensemble à encoches (6a) du premier étage (Eᵢ₋₁) et traverse une encoche (22") du second ensemble à encoches (6b) de ce premier étage (Eᵢ₋₁), tandis qu'un chant (6b') du second ensemble à encoches (6b) du premier étage (Eᵢ₊₁) repose sur la seconde structure (7b) du second étage (Eᵢ,), celle-ci traversant une encoche (24') du premier ensemble à encoches (6a) de ce premier étage (Eᵢ₊₁).

2. Dispositif de rangement selon la revendication 1, **caractérisé en ce que** les premier et second ensembles (6a, 6b) présentent des encoches sur chacun de leurs chants opposés selon la direction d'empilement (8).

3. Dispositif de rangement selon la revendication 1 ou la revendication 2, **caractérisé en ce que** l'alternance des premières structures (7a) et des premiers ensembles à encoches (6a) forment une première cloison de séparation de logements (9), de part et d'autre de laquelle sont au moins délimités deux logements (2), et **en ce que** l'alternance des secondes structures (7b) et des seconds ensembles à encoches (6b) forment une seconde cloison de séparation de logements (11), de part et d'autre de laquelle sont au moins délimités deux logements (2), la première et la seconde cloison de séparation étant orthogonales entre elles.

4. Dispositif de rangement selon la revendication 3, **caractérisé en ce que** chaque première et seconde cloison (9, 11) présente une épaisseur (Ep) sensiblement constante.

5. Dispositif de rangement selon l'une quelconque des revendications précédentes, **caractérisé en ce que** chaque premier étage (E₁, Eᵢ₋₁, Eᵢ₊₁) présente, en dehors d'une zone d'entrecroisement entre les premier et second ensembles à encoches (6a, 6b), une première hauteur moyenne (H₁) selon la direction d'empilement (8), **en ce que** chaque second étage (E₂, Eᵢ) présente, en dehors d'une zone de croisement entre les première et seconde structures (7a, 7b), une seconde hauteur moyenne (H₂) selon la direction d'empilement (8), et **en ce que** les première et seconde hauteurs moyennes (H₁, H₂) répondent à la condition 0,1 < H₂/H₁ < 0,35.

6. Dispositif de rangement selon l'une quelconque des revendications précédentes, **caractérisé en ce que** la première hauteur (H₁) est supérieure à 100 mm.

7. Dispositif de rangement selon l'une quelconque des revendications précédentes, **caractérisé en ce que** la teneur en bore dans au moins certains desdits éléments en alliage d'aluminium des premier et second ensembles à encoches (6a, 6b), est supérieure à 25 mg/cm³.

8. Dispositif de rangement selon l'une quelconque des revendications précédentes, **caractérisé en ce que** chaque première et seconde structure (7a, 7b) est réalisée en acier.

9. Dispositif de rangement selon l'une quelconque des revendications précédentes, **caractérisé en ce que** chaque second étage (E₂, Eᵢ) comporte un pion de jonction (20) au niveau d'une zone de croisement entre les première et seconde structures (7a, 7b) traversées au moins partiellement par ce pion de jonction.

10. Dispositif de rangement selon l'une quelconque des revendications précédentes, **caractérisé en ce que** les première et seconde structures (7a, 7b) sont chacune de section carrée ou rectangulaire.

11. Dispositif de rangement selon l'une quelconque des revendications précédentes, **caractérisé en ce que** les première et seconde structures (7a, 7b) présentent chacune une section de largeur uniforme ou non uniforme.

12. Dispositif de rangement selon l'une quelconque des revendications précédentes, **caractérisé en ce que** les première et seconde structures (7a, 7b) sont chacune traversées par des orifices de passage d'eau (42) s'étendant selon la direction d'empilement (8).

13. Dispositif de rangement selon l'une quelconque des revendications précédentes, **caractérisé en ce que** les première et seconde structures (7a, 7b) sont chacune réalisées d'une seule pièce, ou bien par plusieurs pièces assemblées les unes aux autres.

14. Dispositif de rangement selon l'une quelconque des revendications précédentes, **caractérisé en ce que** les premier et second ensembles à encoches entrecroisés (6a, 6b) sont chacun réalisés d'une seule pièce, ou bien par plusieurs pièces (56, 58) assemblées les unes aux autres et délimitant de préférence entre elles un espace vide (50).

15. Dispositif de rangement selon l'une quelconque des revendications précédentes, **caractérisé en ce qu'**il comprend également des parois périphériques (14) agencées à la périphérie des premiers et seconds étages empilés, lesdites parois périphériques délimitant une partie de certains des logements.

16. Dispositif de rangement selon l'une quelconque des revendications précédentes, **caractérisé en ce qu'**il est configuré de sorte qu'en configuration assemblée, des jeux selon la direction d'empilement (8) soient prévus au niveau des zones de croisement / d'entrecroisement entre les éléments (6a, 6b, 7a, 7b).

17. Emballage pour l'entreposage et/ou le transport d'assemblages de combustible nucléaire, l'emballage comprenant une cavité dans laquelle est logé un dispositif de rangement (1) selon l'une quelconque des revendications précédentes.

18. Colis comprenant un emballage selon la revendication 17 ainsi que des assemblages de combustible agencés dans les logements du dispositif de rangement de cet emballage.

## Patentansprüche

1. Regalvorrichtung (1) für den Transport und/oder das Zwischenlagern von Kernbrennelementen, wobei die Vorrichtung eine Mehrzahl benachbarter Aufnahmen (2) umfasst, die jeweils dazu bestimmt sind, ein Kernbrennelement aufzunehmen, wobei die Vorrichtung mehrere Stufen (E₁, E₂), die gemäß einer Stapelungsrichtung (8) parallel zu den Längsachsen (4) der Aufnahmen gestapelt sind, umfassen, wobei diese Letzteren ganz oder teilweise von den Stufen abgegrenzt sind,
erste Stufen (E₁, Eᵢ₋₁, Eᵢ₊₁) mit Neutronenabsorption und Wärmeleitfähigkeit, sowie zweite Stufen (E₂, Eᵢ) mit mechanischer Widerstandsfähigkeit, die abwechselnd mit den ersten Stufen gemäß der Stapelungsrichtung (8) eingerichtet sind,
wobei jede erste Stufe (E₁, Eᵢ₋₁, Eᵢ₊₁) mindestens eine erste Einheit mit Kerben (6a) umfasst, die sich entlang einer ersten Richtung (10) orthogonal zu der Stapelungsrichtung (8) erstreckt, sowie mindestens eine zweite Einheit von Kerben (6b), die sich entlang einer zweiten Richtung (12), die zu der ersten Richtung (10) sowie zu der Stapelungsrichtung (8) orthogonal ist, erstreckt, wobei die ersten und zweiten Einheiten verschachtelt sind und jeweils mindestens ein Element aus Aluminiumlegierung, das Bor umfasst, umfassen,
wobei jede zweite Stufe (E₂, Eᵢ) mindestens eine erste Struktur (7a) umfasst, die sich entlang der ersten Richtung (10) erstreckt, sowie mindestens eine zweite Struktur (7b), die sich entlang der zweiten Richtung (12) erstreckt, wobei die erste und zweite Struktur entlang der Stapelungsrichtung (8) gestapelt sind und jede aus einem oder mehreren Werkstoffen hergestellt ist, die keine Neutronen absorbierenden Elemente enthalten, wobei die erste und die zweite Struktur jeweils keine Kerben auf ihren Kanten, die entlang der Stapelungsrichtung entgegengesetzt sind, aufweisen, und jeweils einen Querschnitt mit im Wesentlichen konstanter Höhe entlang dieser aufweisen,
**dadurch gekennzeichnet, dass** für mindestens eine der zweiten Stufen (Eᵢ) zu deren beiden Seiten eine erste Stufe (Eᵢ₋₁) und eine erste Stufe (Eᵢ₊₁) eingerichtet sind, die erste Struktur (7a) der zweiten Stufe (Eᵢ) auf einer Kante (6a") der ersten Einheit mit Kerben (6a) der ersten Stufe (Eᵢ₋₁) ruht und eine Kerbe (22") der zweiten Einheit mit Kerben (6b) dieser ersten Stufe (Eᵢ₋₁) durchquert, während eine Kante (6b') der zweiten Einheit mit Kerben (6b) der ersten Stufe (Eᵢ₊₁) auf der zweiten Struktur (7b) der zweiten Stufe (Eᵢ) ruht, wobei diese eine Kerbe (24') der ersten Einheit mit Kerben (6a) dieser ersten Stufe (Eᵢ₊₁) durchquert.

2. Regalvorrichtung nach Anspruch 1, **dadurch gekennzeichnet, dass** die ersten und zweiten Einheiten (6a, 6b) Kerben auf jeder ihrer entlang der Stapelungsrichtung (8) entgegengesetzten Kanten aufweisen.

3. Regalvorrichtung nach Anspruch 1 oder Anspruch 2, **dadurch gekennzeichnet, dass** der Wechsel der ersten Strukturen (7a) und der ersten Einheiten mit Kerben (6a) eine erste Trennwand von Aufnahmen (9) bildet, zu deren beiden Seiten mindestens zwei Aufnahmen (2) abgegrenzt sind, und dass der Wechsel der zweiten Strukturen (7b) und der zweiten Einheiten mit Kerben (6b) eine zweite Trennwand mit Aufnahmen (11) bildet, zu deren beiden Seiten mindestens zwei Aufnahmen (2) abgegrenzt sind, wobei die erste und die zweite Trennwand zueinander orthogonal sind.

4. Regalvorrichtung nach Anspruch 3, **dadurch gekennzeichnet, dass** jede erste und zweite Wand (9, 11) eine im Wesentlichen konstante Stärke (Ep) aufweist.

5. Regalvorrichtung nach einem der vorstehenden Ansprüche, **dadurch gekennzeichnet, dass** jede erste Stufe (E₁, Eᵢ₋₁, Eᵢ₊₁) außerhalb einer Verschachtelungszone zwischen den ersten und zweiten Einheiten mit Kerben (6a, 6b) eine erste mittlere Höhe (H₁) entlang der Stapelungsrichtung (8) aufweist, dass jede zweite Stufe (E₂, Eᵢ) außerhalb einer Kreuzungszone zwischen der ersten und zweiten Struktur (7a, 7b) eine zweite mittlere Höhe (H₂) entlang der Stapelungsrichtung (8) aufweist, und dass die erste und zweite mittlere Höhe (H₁, H₂) die Bedingung 0,1 < H₂/H₁ < 0,35 erfüllen.

6. Regalvorrichtung nach einem der vorstehenden Ansprüche, **dadurch gekennzeichnet, dass** die erste Höhe (H₁) größer ist als 100 mm.

7. Regalvorrichtung nach einem der vorstehenden Ansprüche, **dadurch gekennzeichnet, dass** der Gehalt an Bor in mindestens bestimmten der Elemente aus Aluminiumlegierung der ersten und zweiten Einheit mit Kerben (6a, 6b) größer ist als 25 mg/cm³.

8. Regalvorrichtung nach einem der vorstehenden Ansprüche, **dadurch gekennzeichnet, dass** jede erste und zweite Struktur (7a, 7b) aus Stahl hergestellt ist.

9. Regalvorrichtung nach einem der vorstehenden Ansprüche, **dadurch gekennzeichnet, dass** jede zweite Stufe (E₂, Eᵢ) einen Übergangsstift (20) im Bereich einer Kreuzungszone zwischen der ersten und zweiten Struktur (7a, 7b), die mindestens teilweise von diesem Übergangsstift durchquert werden, umfasst.

10. Regalvorrichtung nach einem der vorstehenden Ansprüche, **dadurch gekennzeichnet, dass** die erste und zweite Struktur (7a, 7b) jeweils quadratischen oder rechteckigen Querschnitt aufweisen.

11. Regalvorrichtung nach einem der vorstehenden Ansprüche, **dadurch gekennzeichnet, dass** die erste und zweite Struktur (7a, 7b) jeweils einen Querschnitt mit gleichmäßiger Breite oder nicht gleichmäßiger Breite aufweisen.

12. Regalvorrichtung nach einem der vorstehenden Ansprüche, **dadurch gekennzeichnet, dass** die erste und zweite Struktur (7a, 7b) jeweils von Wasserdurchgangsöffnungen (42) durchquert sind, die sich entlang der Stapelungsrichtung (8) erstrecken.

13. Regalvorrichtung nach einem der vorstehenden Ansprüche, **dadurch gekennzeichnet, dass** die erste und zweite Struktur (7a, 7b) jeweils aus einem einzigen Stück hergestellt sind, oder aus mehreren Stücken, die aneinandergefügt sind.

14. Regalvorrichtung nach einem der vorstehenden Ansprüche, **dadurch gekennzeichnet, dass** die erste und zweite Einheit mit verschachtelten Kerben (6a, 6b) jeweils aus einem einzigen Stück hergestellt sind, oder aus mehreren Stücken (56, 58), die aneinander gefügt sind und bevorzugt untereinander einen Leerraum (50) abgrenzen.

15. Regalvorrichtung nach einem der vorstehenden Ansprüche, **dadurch gekennzeichnet, dass** sie auch Umfangswände (14) umfasst, die an dem Umfang der ersten und zweiten gestapelten Stufe eingerichtet sind, wobei die Umfangswände einen Teil bestimmter der Aufnahmen abgrenzen.

16. Regalvorrichtung nach einem der vorstehenden Ansprüche, **dadurch gekennzeichnet, dass** sie derart konfiguriert ist, dass Spiele entlang der Stapelungsrichtung (8) in zusammengefügter Konfiguration im Bereich der Kreuzungs-/Verschachtelungszonen zwischen den Elementen (6a, 6b, 7a, 7b) vorgesehen sind.

17. Verpackung zur Zwischenlagerung und/oder zum Transport von Kernbrennstoffelementen, wobei die Verpackung einen Hohlraum umfasst, in dem eine Regalvorrichtung (1) nach einem der vorstehenden Ansprüche aufgenommen ist.

18. Gebinde, das eine Verpackung nach Anspruch 17 sowie Brennstoffelemente, die in den Aufnahmen der Regalvorrichtung dieser Verpackung eingerichtet sind, umfasst.

## Claims

1. A storage device (1) for transporting and/or storing nuclear fuel assemblies, said device including a plurality of adjacent housings (2), each for receiving a nuclear fuel assembly, the device including several stacked stages (E₁, E₂) along a stacking direction (8) parallel to the longitudinal axes (4) of the housings, the latter being delimited fully or partly by said stages,
first stages (E₁, Eᵢ₋₁, Eᵢ₊₁) for neutron absorption and thermal conductivity, as well as second stages (E₂, Eᵢ) for mechanical strength alternately arranged with the first stages along said stacking direction (8),
each first stage (E₁, Eᵢ₋₁, Eᵢ₊₁) comprising at least one notched assembly (6a) extending along a first direction (10) orthogonal to the stacking direction (8), as well as at least one second notched assembly (6b) extending along a second direction (12) orthogonal to the first direction (10) as well as to the stacking direction (8), the first and second assemblies being interlaced and each including at least one element of aluminium alloy comprising boron,
each second stage (E₂, Eᵢ) including at least one first structure (7a) extending along the first direction (10) as well as at least one second structure (7b) extending along the second direction (12), the first and second structures being stacked along the stacking direction (8) and each made of one or more materials free of neutron absorbing elements, the first and second structures being each free of notches on their opposite edges along the stacking direction, and each having a transverse cross-section with a height substantially constant all along the same,
**characterised in that** for at least one of the second stages (Eᵢ) on either side of which a first stage (Eᵢ₋₁) and a first stage (Eᵢ₊₁) are arranged, the first structure (7a) of the second stage (Eᵢ) rests on an edge (6a") of the first notched assembly (6a) of the first stage (Eᵢ₋₁) and passes through a notch (22") of the second notched assembly (6b) of this first stage (Eᵢ₋₁), whereas an edge (6b') of the second notched assembly (6b) of the first stage (Eᵢ₊₁) rests on the second structure (7b) of the second stage (Eᵢ,), this passing through a notch (24') of the first notched assembly (6a) of this first stage (Eᵢ₊₁).

2. The storage device according to claim 1, **characterised in that** the first and second assemblies (6a, 6b) have notches on each of their opposite edges along the stacking direction (8).

3. The storage device according to claim 1 or claim 2, **characterised in that** the alternate first structures (7a) and first notched assemblies (6a) form a first housing separating partition (9), on either side of which two housings (2) are at least delimited, and **in that** the alternate second structures (7b) and second notched assemblies (6b) form a second housing separating partition (11), on either side of which two housings (2) are at least delimited, the first and second separating partitions being orthogonal to each other.

4. The storage device according to claim 3, **characterised in that** each first and second partition (9, 11) has a substantially constant thickness (Ep).

5. The storage device according to any of the preceding claims, **characterised in that** each first stage (E₁, Eᵢ₋₁, Eᵢ₊₁) has, outside an interlaced zone between the first and second notched assemblies (6a, 6b), a first mean height (H₁) along the stacking direction (8), **in that** each second stage (E₂, Eᵢ) has, outside a crossing zone between the first and second structures (7a, 7b), a second mean height (H₂) along the stacking direction (8), and **in that** the first and second mean heights (H₁, H₂) fulfil the condition 0.1 < H₂/H₁ < 0.35.

6. The storage device according to any of the preceding claims, **characterised in that** the first height (H₁) is higher than 100 mm.

7. The storage device according to any of the preceding claims, **characterised in that** the boron content in at least some of said elements of aluminium alloy of the first and second notched assemblies (6a, 6b) is higher than 25 mg/cm³.

8. The storage device according to any of the preceding claims, **characterised in that** each first and second structure (7a, 7b) is made of steel.

9. The storage device according to any of the preceding claims, **characterised in that** each second stage (E₂, Eᵢ) includes a junction pin (20) at a crossing zone between the first and second structures (7a, 7b) through which this junction pin at least partially passes.

10. The storage device according to any of the preceding claims, **characterised in that** the first and second structures (7a, 7b) are each of a square or rectangular cross-section.

11. The storage device according to any of the preceding claims, **characterised in that** the first and second structures (7a, 7b) each have a cross-section with a uniform or non-uniform width.

12. The storage device according to any of the preceding claims, **characterised in that** water ports (42) extending along the stacking direction (8) pass through each of the first and second structures (7a, 7b).

13. The storage device according to any of the preceding claims, **characterised in that** the first and second structures (7a, 7b) are each made as a single piece, or with several pieces assembled to each other.

14. The storage device according to any of the preceding claims, **characterised in that** the first and second interlaced notched assemblies (6a, 6b) are each made as a single piece, or with several pieces (56, 58) assembled to each other and preferably delimiting an empty space (50) between them.

15. The storage device according to any of the preceding claims, **characterised in that** it also comprises peripheral walls (14) arranged at the periphery of the first and second stacked stages, said peripheral walls delimiting a part of some of the housings.

16. The storage device according to any of the preceding claims, **characterised in that** it is configured such that in an assembled configuration, clearances along the stacking direction (8) are provided at the crossing/interlacing zones between the elements (6a, 6b, 7a, 7b).

17. A package for storing and/or transporting nuclear fuel assemblies, the package comprising a cavity in which a storage device (1) according to any of the preceding claims is housed.

18. A pack comprising a package according to claim 17, as well as fuel assemblies arranged in the housings of the storage device of this package.
